# EUROPEAN PATENT SPECIFICATION

(11) **EP 3 898 204 B1**
(45) Date of publication and mention of the grant of the patent: **13.12.2023**
(21) Application number: 19827614.9
(22) Date of filing: 18.12.2019
(51) Int. Cl.: B29C 65/48, G01N 29/04, B29C 65/82, F03D 1/06, B29L 31/08, G01N 29/34

(54) **IMPROVEMENTS RELATING TO WIND TURBINE BLADE MANUFACTURE**
VERBESSERUNGEN IM ZUSAMMENHANG MIT DER WINDTURBINENSCHAUFELHERSTELLUNG
AMÉLIORATIONS APPORTÉES À LA FABRICATION DE PALES D'ÉOLIENNE

(30) Priority: 20.12.2018 DK PA201870834
(43) Date of publication of application: 27.10.2021
(73) Proprietor: VESTAS WIND SYSTEMS A/S, 8200 Aarhus N (DK)
(72) Inventor: PRESTON, Robert Charles, Gurnard PO31 8EH (GB); KEOHAN, Sean, Shanklin PO37 7AY (GB)
(74) Representative: Vestas Patents Department
(86) International application number: PCT/DK2019/050407
(87) International publication number: WO 2020/125902

(56) References cited:
- WO-A1-2016/015735
- CN-A- 108 152 376
- CN-A- 108 614 034
- US-A1- 2017 067 439
- André Lamarre: "Improved Inspection of Composite Wind Turbine Blades with Accessible Advanced Ultrasonic Phased Array Technology", , 17 November 2017 (2017-11-17), XP055671492, Retrieved from the Internet: URL:https://www.ndt.net/events/APCNDT2017/ app/content/Paper/227_Lamarre_Rev3.pdf [retrieved on 2020-02-25]

## Description

### Technical field

The present disclosure relates to a structural web of a wind turbine blade and to a method of forming a structural web. The disclosure also relates to a method of assessing the integrity of adhesive bonds between the structural web and wind turbine blade shell using non-destructive ultrasonic testing techniques.

### Background

Typically wind turbine blades are manufactured in two halves, or shells, which are adhesively bonded together along a leading edge and a trailing edge. One or more structural webs are commonly provided between the shell halves.

Adhesive is used to bond the inner surfaces of the shells to the shear web structure, and to bond the outer edges of the shells together. It will be appreciated that the adhesive bonds provide critical connections between the various components of the blade, and that the bonds must therefore have extremely high integrity to withstand the high forces and fatigue loads experienced in operation. To this end, the process of forming and assessing adhesive bonds during production of wind turbine blades must be highly robust.

WO2016015735 describes a wind turbine blade shear web having a safety edge. US2017067439 describes bonding interfaces between shear webs and spar caps of a wind turbine blade. CN108152376, CN108614034 and "Improved Inspection of Composite Wind Turbine Blades with Accessible Advanced Ultrasonic Phased Array Technology" (André Lamarre, XP055671492) relate to ultrasonic detection methods for wind turbine blades.

It will be appreciated that any flaw in an adhesive bond between the component parts of a wind turbine blade is a potential source of crack propagation and/or failure in use. It is therefore desirable that any flaws in the adhesive bonds are detectable using non-destructive analysis techniques so that they may be remedied before the wind turbine blade is put into service.

It is against this background that the present invention has been developed.

### Summary of the invention

An aspect of the present invention provides a method of using non-destructive ultrasonic test equipment to assess the integrity of an adhesive bond according to claim 1.

The method may preferably be used to assess the integrity of an adhesive bond between a first flange extender of a structural web assembly of a wind turbine blade and a first shell of a wind turbine blade; and to assess the integrity of an adhesive bond between a second flange extender of a structural web assembly of a wind turbine blade and a second shell of a wind turbine blade.

In another aspect of the invention, there is provided a method of producing a wind turbine blade according to claim 3.

The structural web comprises the web member and the flange extender. The flange extender is then bonded to the inner surface of the wind turbine blade shell, and this inner surface may be the inner surface of a spar cap.

The flange extender may have a thickness of between 0.5mm and 1 mm, preferably around 0.8mm. The flange portion of the web may have a thickness of between 1mm and 5mm, preferably between 2mm and 3mm. The flange portion of the web may be at least twice as thick as the flange extender. The "thickness" refers to the size of the components between its two major surfaces.

The web member preferably comprises two flange portions and may preferably have a substantially C-shaped cross-section. A flange extender is preferably integrated with each flange portion.

### Brief description of the drawings

The present invention will now be described by way of non-limiting examples with reference to the following figures, in which:
Figure 1 shows a schematic view of a cross-section of a prior art structural web;
Figure 2a shows a schematic view of a cross-section of the structural web assembly of Figure 1 bonded to the inner surface of a wind turbine blade shell;
Figure 2b shows a schematic view of a cross-section of a poor adhesive bond formed between the web assembly of Figure 1 and a wind turbine blade shell;
Figure 3a shows a schematic view of a cross-section of a structural web according to the present invention;
Figure 3b shows a schematic representation of a manufacturing process for forming the structural web of Figure 3a;
Figure 4 shows a schematic view of a cross-section of an alternative structural web according to the present invention;
Figure 5a shows a schematic cross-sectional view of the structural web of Figure 3a bonded between first and second wind turbine blade shells;
Figure 5b shows a schematic representation of a method for bonding the structural web of Figure 3a to the inner surfaces of the wind turbine blade shells;
Figure 6a shows a schematic cross-sectional view of a section of the bonded structural web of Figure 5a; and
Figure 6b shows a schematic cross-sectional view of a section of the bonded structural web having a poor bond with the inner surface of a wind turbine blade shell.

### Detailed description

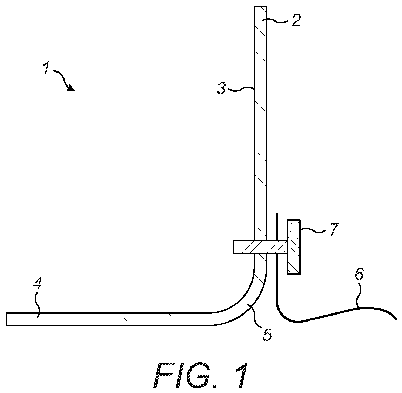

Figure 1 shows a schematic view of a cross-section of a prior art structural web assembly 1 comprising a web member 2 having a web portion 3 and a flange portion 4. A substantially curvilinear heel 5 is located between the web portion 3 and the flange portion 4. The web member 2 is made of a composite material such as a glass fibre composite. A plastic glue catcher 6 is attached to the web portion 3 by plastic scrivets 7.

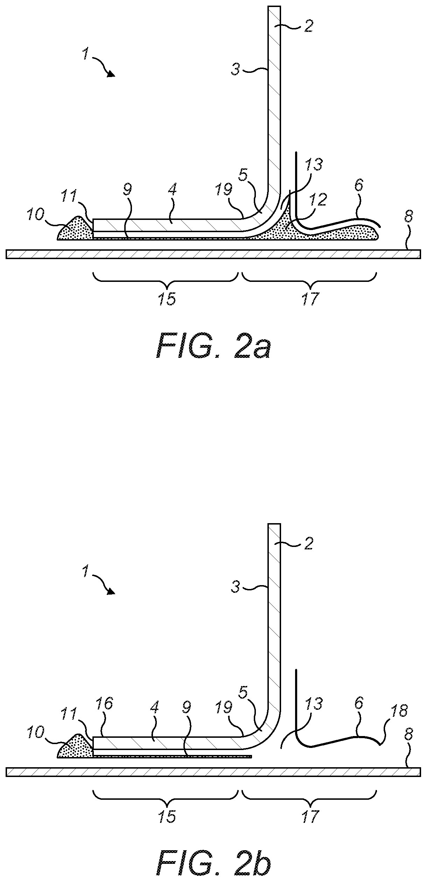

Referring now to Figure 2a, a schematic view of a cross-section of the structural web assembly 1 bonded to the inner surface of a wind turbine blade shell 8 is shown. The scrivet 7 is omitted to avoid cluttering of the figure. In existing blade manufacturing processes, a bead of adhesive 9 is applied to the flange portion 4 of the web member 2 before bringing the wind turbine blade shell 8 into contact with the adhesive 9 and applying pressure to cause the adhesive 9 to be pushed along the breadth of the flange portion 4 in either direction and out from either side. The adhesive is then cured to form an adhesive bond between the web member 2 and the wind turbine blade shell 8. Pressure is maintained for the duration of the cure to improve the strength and integrity of the bond. In an alternative method, the bead of adhesive 9 is applied to the inner surface of the wind turbine blade shell 8 and the flange portion 4 of the web member 2 is applied to the adhesive and cured under pressure as described above.

Figure 2a depicts an idealised view of the adhesive bond in which the adhesive 9 has been pushed out from between the flange portion 4 and the wind turbine blade shell 8 such that a first accumulation of adhesive 10 is formed at a free edge 11 of the flange portion 4, and such that a second accumulation of adhesive 12 is formed in a space 13 between the heel 5 of the web member 2, the glue catcher 6, and the inner surface of the wind turbine blade shell 8.

The purpose of the glue catcher 6 is to prevent the adhesive 9 from flowing away from the heel 5 as pressure is applied between the web member 2 and the wind turbine blade shell 8. It will be appreciated that it is imperative to have sufficient adhesive 9 in the region of the heel 5 to ensure a good bond between the web 1 and the shell 8. The purpose of the glue catcher 6 is to prevent the adhesive 9 from flowing away from the heel 5 as it is pushed out from between the web member 2 and the wind turbine blade shell 8, and to retain it in the space 13. In this way, enough adhesive 9 is located between the heel 5 of the web member 2 and the wind turbine blade shell 8 to provide sufficient coverage of the heel 5 and to avoid the formation of potentially crack propagating sharp interfaces.

Figure 2b shows a schematic view of a cross-section of a poorly formed adhesive bond between the web assembly 1 and a wind turbine blade shell 8. In this example, the adhesive 9 has not been pushed sufficiently far along the flange portion 4 in the direction of the heel 5 such that no accumulation has formed in the space 13.

In Figure 2a, adhesive 9 is disposed between the heel 5 and the blade shell 8. In other words, adhesive 9 covers the radius of the heel 5. This ensures a good adhesive bond between the web assembly 1 and the blade shell 8. In contrast, in Figure 2b there is no adhesive 9 between the heel 5 and the blade shell 8, i.e. there is no adhesive 9 covering the radius of the heel 5. When the web assembly 1 of Figure 2b is put under load, the web assembly 1 may fail in the region of the heel 5 as the heel 5 has not been adhesively bonded to the shell 8.

One of the problems of the prior art method of manufacture is that it is not possible to know if there is sufficient adhesive 9 in the space 13 to ensure that a robust bond has been formed. The glue catcher 6 is very flexible and the scrivets 7 are relatively weak. Because of this, it may be that the adhesive 9 has pushed the glue catcher 6 out of the way, and/or that the scrivets 7 have broken under the tensile loads caused by the adhesive 9 pushing against the glue catcher 6 as it is pushed out from between the web member 2 and the wind turbine blade shell 8.

Once the structural web assembly 1 is bonded between the wind turbine blade shells, it is not possible to visually inspect the adhesive bond. Furthermore, it is also not possible to interrogate the integrity of the adhesive bond in the region of the heel 5 using ultrasonic non-destructive testing (NDT) equipment as there is no internal feature in this region which may be reliably identified by ultrasonic NDT examination.

Referring to Figures 2a and 2b together, it is not possible to tell the difference between the two bond configurations shown using ultrasonic NDT analysis. As is well understood in the art of ultrasonic NDT analysis of wind turbine blade adhesive bonds, in order to ascertain if adhesive 9 is present in a particular region of a bonded area, it is necessary for there to be an identifiable feature in the interior of the wind turbine blade structure which can be positively identified. This is typically an interior surface.

In an NDT process, an ultrasonic transducer is positioned outside of the blade shell 8 (i.e. below the blade shells in the orientation of Figures 2a and 2b). The transducer emits an ultrasonic pulse into the blade shell 8. The ultrasonic waves will travel through the blade and will reflect at a back wall or at a defect in the structure.

Referring to Figure 2b, in the region 15 extending over the breadth of the flange portion 4 from its free edge 11 to a position 19 immediately before the heel 5, the inner surface 16 of the flange portion 4 may be identified by NDT analysis as the ultrasonic signal reflects off the interface between the inner surface 16 and the air filled space in the interior of the blade. This occurs at a predictable/consistent depth (corresponding to a signal return time) so that the surface 16 may be positively identified. Positive identification of this surface provides a strong indication that the region between the flange portion 4 and the inner surface of the wind turbine blade shell 8 is filled with adhesive 9 and that therefore a good bond exists. If there is any portion of the region 15 in which there is an anomalous signal return at a lower depth (or a shorter signal return time), this indicates the existence of an air pocket somewhere below the surface 16, and hence a poor adhesive bond.

In contrast to this, in the region 17 extending from the position 19, immediately before the beginning of the heel 5, to the free end 18 of the glue catcher 6, there are no internal surfaces which may be positively identified by ultrasonic NDT analysis. Because of the curved shape of the heel 5 and the glue catcher 6, as well as the flexibility of the glue catcher 6 and the unpredictable formation of the accumulation of adhesive 12, it is not possible to positively identify any part of the interior blade structure in the region 17. For an NDT technician, the good adhesive bond of Figure 2a would be indistinguishable from the poor adhesive bond of Figure 2b.

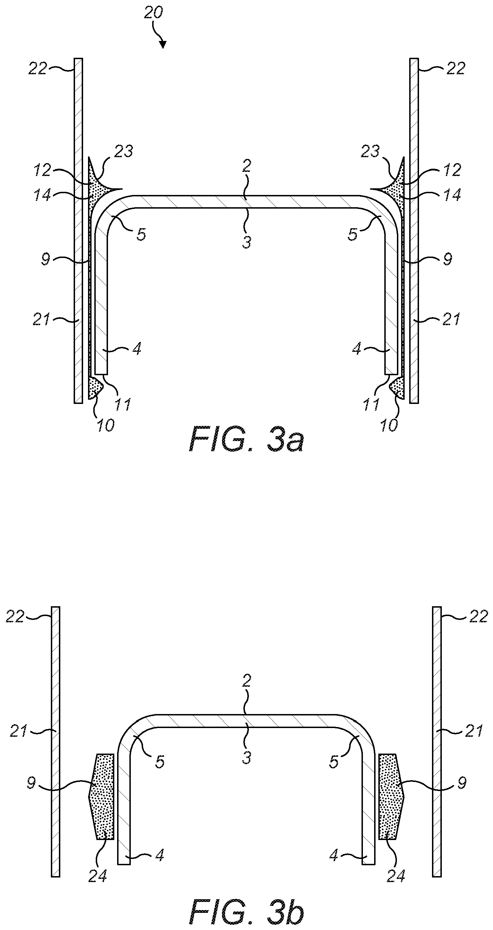

Referring now to Figure 3a, a schematic view of a cross-section of an example structural web 20 is shown. For simplicity, like reference numerals are used to identify like features throughout the description.

The structural web 20 comprises a web member 2 having a web portion 3 and two flange portions 4 located on either side of the web portion 3. The flange portions 4 extend transversely from the web portion 3. A heel 5 is located between each of the flange portions 4 and the web portion 3. Two flange extenders 21 are integrated with the flange portions 4 by means of an adhesive bond. In this example, adhesive 9 is located between the flange extenders 21 and the flange portions 4.

The web portion 3 and two flange portions 4 together form a 'C' shaped web. With the addition of the flange extenders 21 this results in an 'I' shaped web assembly. The heel 5 is the transition between the web portion 3 and the flange portion 4 and is curved, such that it has a radius. To ensure a good load path between the web portion 3 and the flange portion 4, the radius of curvature of the heel 5 may be 20mm for example.

Figure 3b shows a schematic representation of the manufacturing process for forming the structural web 20. A cured glass fibre composite web member 2 is provided along with two substantially planar cured glass fibre composite flange extenders 21. The flange extenders 21 may be rigid, or substantially rigid. In this example the flange extenders 21 are formed of a sheet of substantially planar cured glass fibre composite.

The web member 2 is placed on a mould (not shown) and a bead 24 of adhesive 9 is applied to an outer surface of each of the flange portions 4. The flange extenders 21 are positioned adjacent to the flange portions 4 such that a portion 22 of the flange extenders 21 project past the heels 5 and away from the web portion 3. Pressure is applied to bring the flange extenders 21 into contact with the adhesive 9 and to force the adhesive 9 to flow along the breadth of the flange portions 4 so that a layer of adhesive 9 is formed between the flange extenders 21 and the flange portions 4.

As shown in Figure 3a, accumulations of adhesive 10 form at the free edges 11 of the flange portions 4 and an accumulation of adhesive 12 forms in the region of the heels 5 between the web member 2 and the flange extenders 21. In an optional, but recommended, step, a fillet profile 23 is formed in the accumulation of adhesive 12 in the region of the heels 5. In this way, the shape of the adhesive 9 in this area, and its interface with the flange extenders 21, heels 5, and web portion 3, can be accurately controlled to prevent any sharp interfaces being formed that might lead to stress concentrations in the finished wind turbine blade. In the example shown in Figure 3a, the area between the flange extenders 21 and the web member 2 in the region of the heels 5 is entirely filled with adhesive 9.

Once the adhesive has a suitable profile 23, it is cured so that the flange extenders 21 become integrated with the flange portions 4 of the web member 2 to form the structural web 20. The pressure applied between the flange extenders 21 and the flange portions 4 of the web member 2 is maintained for the duration of the adhesive cure to better ensure the integrity of the adhesive bond.

The adhesive bond between the flange portions 4 and the flange extenders 21 can be visually inspected. As can be seen there is an accumulation 10 of adhesive 9 at the free edge 11 of the flange portion 4 and an accumulation of adhesive 12 in the region of the heel 5 between the web member 2 and the flange extenders 21. This indicates that there will be adhesive across the full width of the flange portion 4. In addition, where the flange extender 21 is formed from glass fibre reinforced plastic it will be translucent, so a visual inspection of the adhesive bond can also be carried out simply by looking through the flange extender 21. These simple visual inspections can be used to qualify the use of the structural web 20 in the wind turbine blade manufacturing process.

The adhesive 9 that forms in the region of the heel 5 between the web member 2 and the flange extenders 21 (e.g. 12 in Figure 3a) can be more generally referred to as "heel coverage" 14. The heel coverage 14 covers the radius of the heel 5; in particular it covers the outer radius of the heel. This heel coverage 14 ensures a good adhesive bond between the heel 5 and the flange extender 21.

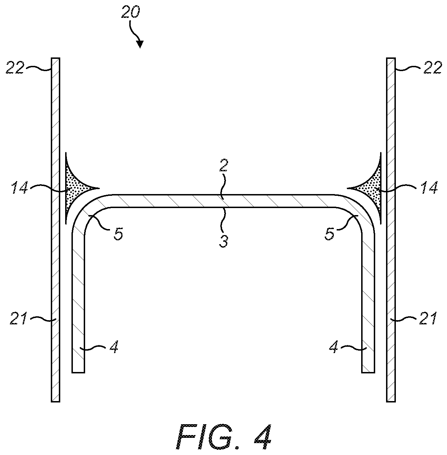

Figure 4 shows a schematic view of the manufacturing process for an alternative example structural web 20. In this example, in the finished structural web 20, there is no separate adhesive 9 between the flange portions 4 of the web member 2 and the flange extenders 21. Rather, the flange extenders 21 are integrated with the flange portions 4 in a cured resin matrix.

Heel coverage 14 is provided between the web member 2 and the flange extenders 21 in the region of the heel 5 to provide a suitable load transfer path without sharp edges or transitions.

In the example of Figure 4, an uncured web member 2 is placed on a mould (not shown) and the flange extenders 21 are positioned adjacent to the flange portions 4 of the web member 2 such that a portion 22 of the flange extenders 21 project past the heels 5 and away from the web portion 3. The flange extenders 21 in this example may be uncured fibre composite lay-ups of dry or pre-impregnated fibres. However, it is recommended that the flange extenders 21 comprise a pre-cured fibre composite material.

If the web member 2 comprises a lay-up of dry fibre material, the assembly is enclosed in a vacuum bag and resin is infused into the fibre lay-up prior to curing in a vacuum assisted resin transfer moulding technique (VARTM). If the web member 2 comprises a lay-up of pre-impregnated fibre material, the resin infusion step is not required and the resin is cured in a conventional pre-preg process. During the resin cure, the flange extenders 21 become integrated with the flange portions 4 of the web member 2 to form the structural web 20.

In the example of Figure 4, the heel coverage 14 may be provided as a bead of adhesive 9. Alternatively, the heel coverage 14 may be provided as a filler material, integrated with resin.

For example, when the heel coverage 14 is a bead of adhesive, the adhesive 9 may be applied before the resin is cured (in the VARTM or pre-preg process) such that the adhesive 9 is in place and is cured along with the resin. Alternatively, the adhesive 9 may be applied after the resin is cured. The adhesive 9 is then cured in a separate step. A combination of these two methods may be used such that some of the adhesive 9 is applied before the resin cure, and a subsequent application of adhesive 9 is made after the resin cure. In either case, the adhesive 9 is preferably shaped with a filet profile 23 to ensure no sharp transitions between the adhesive 9 and the web member 2 or flange extenders 21.

When the heel coverage 14 is a filler material this may be incorporated as part of a VARTM process. A filler material, such as a fibrous rope, is placed between the web member 2 and the flange extender 21 in the region of the heel 5. During the resin infusion step, resin will infuse into the filler material to provide the heel coverage 14.

Regardless of whether the heel coverage 14 is a bead of adhesive or a filler material infused with resin, the end result is the same. Namely, a region of adhesive or resin which covers the radius of the heel 5 and ensures a good adhesive bond between the heel 5 and the flange extender 21.

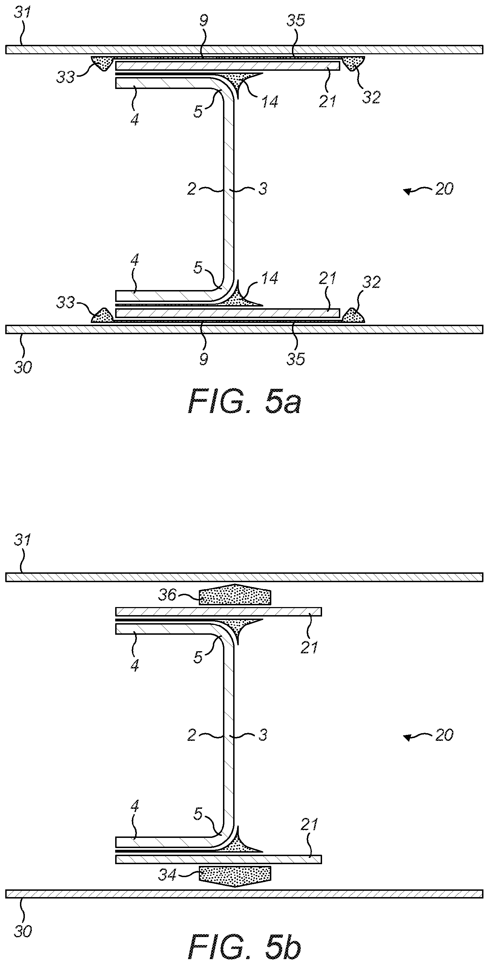

Figure 5a shows a schematic cross-sectional view of a structural web 20 bonded between first 30 and second 31 wind turbine blade shells. As shown, the structural web 20 is adhesively bonded to the inner surface of the wind turbine blade shells 30, 31 by adhesive 9. The structural web 20 depicted in Figure 5a corresponds to the structural web 20 of Figure 3a. However, it will be understood that any of the structural web configurations described above may be used in place of the structural web 20 shown.

Figure 5b shows a schematic representation of a method for bonding the structural web 20 to the inner surfaces of the wind turbine blade shells 30, 31. In a first step, a bead 34 of adhesive 9 is applied to the inner surface of the first wind turbine blade shell 30. The structural web 20 is then placed on top of the adhesive 9 and pressure is applied to cause the adhesive 9 to flow between the flange extender 21 and the inner surface of the first wind turbine blade 30. Under the action of the applied pressure the adhesive 9 forms a layer 35 between the flange extender 21 and the inner surface of the first wind turbine blade 30. The adhesive 9 also forms accumulations 32, 33 at each free end of the flange extender 21. The adhesive 9 is then cured with the pressure being maintained throughout the duration of the cure.

After curing of the adhesive bond between the structural web 20 and the first wind turbine blade shell 30, a bead 36 of adhesive 9 is applied to the outermost surface of the remaining un-bonded flange extender 21. The second wind turbine blade shell 31 is placed on top of the adhesive 9 and pressure is applied to cause the adhesive 9 to flow between the flange extender 21 and the inner surface of the second wind turbine blade 31. Under the action of the applied pressure the adhesive 9 forms a layer 35 between the flange extender 21 and the inner surface of the second wind turbine blade 31 and forms accumulations 32, 33 at each free end of the flange extender 21. The adhesive 9 is cured with the pressure being maintained throughout the duration of the cure.

Figure 5b has been described with respect to a two stage joining process, where the structural web is first bonded to the lower shell before it is bonded to the upper shell. However, a one stage joining process can also be used where the structural web is bonded to both shells simultaneously.

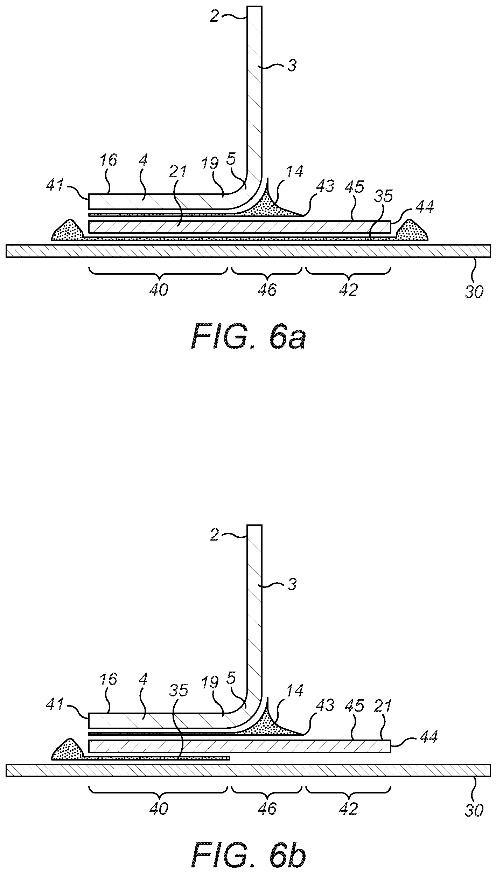

Figure 6a shows a schematic cross-sectional view of a section of the bonded structural web 20 and first wind turbine blade shell 30 of Figure 5a. In a region 40 extending over the breadth of the flange portion 4 and flange extender 21 from a first free edge 41 to a position 19 immediately before the heel 5, the inner surface 16 of the flange portion 4 may be identified by NDT analysis as the ultrasonic signal reflects off the interface between the inner surface 16 and the air filled space in the interior of the blade. This occurs at a predictable/consistent depth (corresponding to a signal return time) so that the surface 16 may be positively identified. Positive identification of this surface provides a strong indication that the region between the flange extender 21 and the inner surface of the first wind turbine blade shell 30 is filled with adhesive and that a good bond exists in region 40. If there is any portion of the region 40 in which there is an anomalous signal return at a lower depth (or a shorter signal return time), this indicates the existence of an air pocket somewhere below the surface 16 and hence a poor adhesive bond. There should not be any defects in the bondline between the flange portion 4 and the flange extender 21 as this has already been visually inspected as described above. However, if there are any defects in the bondline between the flange portion 4 and the flange extender 21 this will be identified by the NDT analysis.

Similarly, in region 42 extending from a free edge 43 of the heel coverage 14 to a second free edge 44 of the flange extender 21, an inner surface 45 of the flange extender 21 may be identified by NDT analysis as the ultrasonic signal reflects off the interface between the inner surface 45 of the flange extender and the air filled space in the interior of the blade. Once again, this occurs at a predictable/consistent depth (corresponding to a signal return time) so that the surface 45 may be positively identified. As before, positive identification of this surface provides a strong indication that the region 42 between the flange extender 21 and the inner surface of the first wind turbine blade shell 30 is filled with adhesive and that therefore a good bond exists. If there is any portion of the region 42 in which there is an anomalous signal return at a lower depth (or a shorter signal return time), this indicates the existence of an air pocket somewhere below the surface 45 and hence a poor adhesive bond.

In contrast to the above, in the region 46 extending from the position 19 at the beginning of the heel 5 to the free edge 43 of the heel coverage 14, there are no internal surfaces which may be positively identified by ultrasonic NDT analysis. Because of the curved shape of the heel 5 and the heel coverage 14 in this region, it is not possible to positively identify any part of the interior blade structure in region 46. However, in view of the fact that it has been possible to ascertain that there is a good adhesive bond in the neighbouring regions 40 and 42, it is possible to surmise that, in all probability, the bond is also good in region 46.

By way of contrast, Figure 6b depicts a schematic cross-sectional view of a section of a bonded structural web 20 having a poor bond between the flange extender 21 and the inner surface of the wind turbine blade 30. In this case, it is possible to ascertain by ultrasonic NDT analysis that the bond in region 40 is good and that the bond in region 42 is poor. It is not possible to ascertain the condition of the bond in region 46. As the bond in region 42 is poor, this indicates that there may also be a poor bond in region 46 as well; and, as has been described above, if the bondline between the heel 5 and the blade shell 8 is poor this can lead to failure. Therefore, because it is known that the bond in region 42 is poor, it is possible to prevent the wind turbine blade from being passed through a quality control process and to ensure that the poor bond is fixed before the blade is put into service.

As a result of the configuration of the structural web 20 and the manufacturing process described above, it is possible to have a high level of certainty that the adhesive bonds in the wind turbine blade between the structural web 20 and the wind turbine blade shells 30, 31 are robust. This is because the adhesive bonds in the structural web 20 are either visible or suitable for ultrasonic NDT analysis before the structural web 20 is bonded into the wind turbine blade, and because the adhesive bond between the structural member 20 and the wind turbine blade shells 30, 31 may be interrogated by ultrasonic NDT analysis in such a way as to provide a sufficient level of certainty that the bond is robust across its entire breadth.

In the examples described the web 20 is formed from glass fibre reinforced plastic (GFRP). The plastic matrix may be an epoxy matrix, for example. The adhesive used to bond the flange portion 4 to the flange extender 21 may be an epoxy or a polyurethane adhesive, for example. The adhesive used to bond the flange extender 21 to the blade shells may also be an epoxy or a polyurethane adhesive, for example. The wind turbine blade shells may be formed from GFRP and may also include carbon fibre reinforced plastic (CFRP).

In the examples described above the structural web 20 is formed first as a 'C' shaped web, and then the addition of the flange extenders results in an 'I' shaped web. However, it would also be possible to use the flange extender 21 on a single side of the web, rather than on both sides as shown in the Figures.

As described the flange extender 21 is a pre-cured composite component that is attached to the flange portions 4 of the web. The flange extender may have a thickness of between 0.5mm and 1 mm, preferably around 0.8mm. The flange portions 4 of the web may have a thickness of between 1mm and 5mm, preferably between 2mm and 3mm. Therefore, it can be seen that the flange extender 21 is a relatively thin component that is attached to the flange portion 4 as a process aid for adhesively bonding the structural web 20 to the blade shell. In other words, the flange extender does not contribute to the structural strength of the web, other than by ensuring a robust bond between the web and the shell.

## Claims

1. A method of using non-destructive ultrasonic test equipment to assess the integrity of an adhesive bond between a flange extender (21) of a structural web assembly (2) of a wind turbine blade and a shell (30, 31) of a wind turbine blade, the structural web assembly comprising:
a web member (2) having a web portion (3) and a flange portion (4) extending away from the web portion (3), wherein the web member (2) comprises a heel (5) of substantially curvilinear form located between the web portion (3) and the flange portion (4); and
a flange extender (21) integrated with the flange portion (4) of the web member (2), wherein a first section of the flange extender (21) overlies the flange portion (4) and a second section (22) of the flange extender (21) extends past the heel (5) and away from the web portion (3) of the web member (2);
the method comprising:
using non-destructive ultrasonic test equipment to identify first (16) and second (45) target surfaces of the structural web assembly (2), wherein the first (16) and second (45) target surfaces are spaced from one another by an intermediate region (46) in which it is not possible to positively identify any surface using the non-destructive ultrasonic test equipment, wherein positive identification of the first (16) and second (45) target surfaces is indicative of a good integrity bond in the intermediate region (46), and wherein positive identification of only one, or neither, of the target surfaces (16, 45) is indicative of a poor integrity bond in the intermediate region (46);
wherein the first target surface is identified as being an inner surface (16) of the flange portion (4) of the structural web assembly (2) and the second target surface (45) is identified as being an inner surface (45) of the flange extender (21); and
wherein the intermediate region (46) is identified as corresponding to the vicinity of the heel (5) of substantially curvilinear form of the structural web assembly (2).

2. A method according to claims 1, comprising:
using the method to assess the integrity of an adhesive bond between a first flange extender (21) of a structural web assembly (2) of a wind turbine blade and a first shell (30) of a wind turbine blade; and
using the method to assess the integrity of an adhesive bond between a second flange extender (21) of a structural web assembly (2) of a wind turbine blade and a second shell (31) of a wind turbine blade.

3. A method of producing a wind turbine blade, the method comprising:
providing a structural web (20) comprising:
a web member (2) having a web portion (3) and a flange portion (4) extending away from the web portion (3), wherein the web member (2) comprises a heel (5) of substantially curvilinear form located between the web portion (3) and the flange portion (4); and
a flange extender (21) integrated with the flange portion (4) of the web member (2), wherein a first section of the flange extender (21) overlies the flange portion (4) and a second section (22) of the flange extender (21) extends past the heel (5) and away from the web portion (3) of the web member (2);
bonding the flange extender (21) of the structural web (20) to the inner surface of a windward or leeward wind turbine blade shell (3, 31) using an adhesive (9) to form an adhesive bond; and
using non-destructive ultrasonic test equipment to assess the integrity of the adhesive bond according to the method of claim 1.

4. A method of producing a wind turbine blade according to claim 3, wherein the flange extender (21) has a thickness of between 0.5mm and 1mm, preferably around 0.8mm

5. A method of producing a wind turbine blade according to claim 3 or claim 4, wherein the flange portion (4) of the web has a thickness of between 1mm and 5mm, preferably between 2mm and 3mm.

6. A method of producing a wind turbine blade according to any of claims 3 to 5, wherein the flange portion (4) of the web is at least twice as thick as the flange extender (21).

7. A method of producing a wind turbine blade according to any of claims 3 to 6, wherein the web member (2) comprises two flange portions (4).

8. A method of producing a wind turbine blade according to claim 7, wherein the web member (2) has a substantially C-shaped cross-section.

9. A method of producing a wind turbine blade according to claim 7 or 8, wherein a flange extender (21) is integrated with each flange portion (4).

## Patentansprüche

1. Verfahren zum Verwenden eines nicht destruktiven Ultraschalltestgeräts zum Bewerten der Integrität einer Klebverbindung zwischen einer Flanschverlängerung (21) einer Struktursteganordnung (2) eines Windkraftanlagenblatts und einer Schale (30, 31) eines Windkraftanlagenblatts, wobei die Struktursteganordnung Folgendes umfasst:
ein Stegelement (2) mit einem Stegabschnitt (3) und einem Flanschabschnitt (4), der sich von dem Stegabschnitt (3) weg erstreckt, wobei das Stegelement (2) eine Ferse (5) in einer im Wesentlichen krummlinigen Form umfasst, die sich zwischen dem Stegabschnitt (3) und dem Flanschabschnitt (4) befindet; und
eine Flanschverlängerung (21), die mit dem Flanschabschnitt (4) des Stegelements (2) integriert ist, wobei ein erster Teil der Flanschverlängerung (21) über dem Flanschabschnitt (4) liegt und ein zweiter Teil (22) der Flanschverlängerung (21) sich über die Ferse (5) hinaus und weg von dem Stegabschnitt (3) des Stegelements (2) erstreckt;
wobei das Verfahren umfasst:
Verwenden eines nicht destruktiven Ultraschalltestgeräts, um eine erste (16) und zweite (45) Zieloberfläche der Struktursteganordnung (2) zu identifizieren, wobei die erste (16) und zweite (45) Zieloberfläche durch einen Zwischenbereich (46) voneinander beabstandet sind, in dem es nicht möglich ist, eine Oberfläche unter Verwendung des nicht destruktiven Ultraschalltestgeräts positiv zu identifizieren, wobei positive Identifizierung der ersten (16) und zweiten (45) Zieloberfläche ein Anzeichen für eine Verbindung guter Integrität in dem Zwischenbereich (46) ist, und wobei positive Identifizierung nur einer oder keiner der Zieloberflächen (16, 45) ein Anzeichen einer Verbindung schlechter Integrität in dem Zwischenbereich (46) ist;
wobei die erste Zieloberfläche als eine Innenoberfläche (16) des Flanschabschnitts (4) der Struktursteganordnung (2) identifiziert ist und die zweite Zieloberfläche (45) als eine Innenoberfläche (45) der Flanschverlängerung (21) identifiziert ist; und
wobei der Zwischenbereich (46) als der Nähe der Ferse (5) in im Wesentlichen krummliniger Form der Struktursteganordnung (2) entsprechend identifiziert ist.

2. Verfahren nach Anspruch 1, umfassend:
Verwenden des Verfahrens zum Bewerten der Integrität einer Klebverbindung zwischen einer ersten Flanschverlängerung (21) einer Struktursteganordnung (2) eines Windkraftanlagenblatts und einer ersten Schale (30) eines Windkraftanlagenblatts; und
Verwenden des Verfahrens zum Bewerten der Integrität einer Klebverbindung zwischen einer zweiten Flanschverlängerung (21) einer Struktursteganordnung (2) eines Windkraftanlagenblatts und einer zweiten Schale (31) eines Windkraftanlagenblatts.

3. Verfahren zum Herstellen eines Windkraftanlagenblatts, wobei das Verfahren umfasst:
Bereitstellen eines Strukturstegs (20), umfassend:
ein Stegelement (2) mit einem Stegabschnitt (3) und einem Flanschabschnitt (4), der sich von dem Stegabschnitt (3) weg erstreckt, wobei das Stegelement (2) eine Ferse (5) in einer im Wesentlichen krummlinigen Form umfasst, die sich zwischen dem Stegabschnitt (3) und dem Flanschabschnitt (4) befindet; und
eine Flanschverlängerung (21), die mit dem Flanschabschnitt (4) des Stegelements (2) integriert ist, wobei ein erster Teil der Flanschverlängerung (21) über dem Flanschabschnitt (4) liegt und ein zweiter Teil (22) der Flanschverlängerung (21) sich über die Ferse (5) hinaus und weg von dem Stegabschnitt (3) des Stegelements (2) erstreckt;
Verbinden der Flanschverlängerung (21) des Strukturstegs (20) mit der Innenoberfläche einer luvseitigen oder leeseitigen Windkraftanlagenblattschale (3, 31) unter Verwendung eines Klebstoffs (9), um eine Klebverbindung zu bilden; und
Verwenden eines nicht destruktiven Ultraschalltestgeräts zum Bewerten der Integrität der Klebverbindung gemäß dem Verfahren nach Anspruch 1.

4. Verfahren zum Herstellen eines Windkraftanlagenblatts nach Anspruch 3, wobei die Flanschverlängerung (21) eine Dicke zwischen 0,5 mm und 1 mm, vorzugsweise etwa 0,8 mm aufweist.

5. Verfahren zum Herstellen eines Windkraftanlagenblatts nach Anspruch 3 oder Anspruch 4, wobei der Flanschabschnitt (4) des Stegs eine Dicke zwischen 1 mm und 5 mm, vorzugsweise zwischen 2 mm und 3 mm aufweist.

6. Verfahren zum Herstellen eines Windkraftanlagenblatts nach einem der Ansprüche 3 bis 5, wobei der Flanschabschnitt (4) des Stegs mindestens zweimal so dick wie die Flanschverlängerung (21) ist.

7. Verfahren zum Herstellen eines Windkraftanlagenblatts nach einem der Ansprüche 3 bis 6, wobei das Stegelement (2) zwei Flanschabschnitte (4) umfasst.

8. Verfahren zum Herstellen eines Windkraftanlagenblatts nach Anspruch 7, wobei das Stegelement (2) einen im Wesentlichen C-förmigen Querschnitt aufweist.

9. Verfahren zum Herstellen eines Windkraftanlagenblatts nach Anspruch 7 oder 8, wobei eine Flanschverlängerung (21) mit jedem Flanschabschnitt (4) integriert ist.

## Revendications

1. Procédé d'utilisation d'un équipement d'essai ultrasonique non destructif pour évaluer l'intégrité d'une liaison adhésive entre un prolongateur de bride (21) d'un ensemble de traverse structurelle (2) d'une pale d'éolienne et une paroi (30, 31) d'une pale d'éolienne, l'ensemble de traverse structurelle comprenant :
un élément de traverse (2) présentant une partie de traverse (3) et une partie de bride (4) s'étendant à l'écart de la partie de traverse (3), dans lequel l'élément de traverse (2) comprend un talon (5) de forme sensiblement curviligne situé entre la partie de traverse (3) et la partie de bride (4) ; et
un prolongateur de bride (21) intégré à la partie de bride (4) de l'élément de traverse (2), dans lequel une première section du prolongateur de bride (21) recouvre la partie de bride (4) et une seconde section (22) du prolongateur de bride (21) s'étend au-delà du talon (5) et à l'écart de la partie de traverse (3) de l'élément de traverse (2) ;
le procédé comprenant l'étape consistant à :
utiliser un équipement d'essai ultrasonique non destructif pour identifier des première (16) et seconde (45) surfaces cibles de l'ensemble de traverse structurelle (2), dans lequel les première (16) et seconde (45) surfaces cibles sont espacées l'une de l'autre par une région intermédiaire (46) dans laquelle il n'est pas possible d'identifier positivement une surface en utilisant l'équipement d'essai ultrasonique non destructif, dans lequel l'identification positive des première (16) et seconde (45) surfaces cibles indique une bonne intégrité de liaison dans la région intermédiaire (46), et dans lequel l'identification positive d'une seule, ou d'aucune, des surfaces cibles (16, 45) indique une mauvaise intégrité de liaison dans la région intermédiaire (46) ;
dans lequel la première surface cible est identifiée comme étant une surface intérieure (16) de la partie de bride (4) de l'ensemble de traverse structurelle (2) et la seconde surface cible (45) est identifiée comme étant une surface intérieure (45) du prolongateur de bride (21) ; et
dans lequel la région intermédiaire (46) est identifiée comme correspondant à la proximité du talon (5) de forme sensiblement curviligne de l'ensemble de traverse structurelle (2).

2. Procédé selon la revendication 1, comprenant les étapes consistant à :
utiliser le procédé pour évaluer l'intégrité d'une liaison adhésive entre un premier prolongateur de bride (21) d'un ensemble de traverse structurelle (2) d'une pale d'éolienne et une première paroi (30) d'une pale d'éolienne ; et
utiliser le procédé pour évaluer l'intégrité d'une liaison adhésive entre un second prolongateur de bride (21) d'un ensemble de traverse structurelle (2) d'une pale d'éolienne et une seconde paroi (31) d'une pale d'éolienne.

3. Procédé de production d'une pale d'éolienne, le procédé comprenant les étapes consistant à :
fournir une traverse structurelle (20) comprenant :
un élément de traverse (2) présentant une partie de traverse (3) et une partie de bride (4) s'étendant à l'écart de la partie de traverse (3), dans lequel l'élément de traverse (2) comprend un talon (5) de forme sensiblement curviligne situé entre la partie de traverse (3) et la partie de bride (4) ; et
un prolongateur de bride (21) intégré à la partie de bride (4) de l'élément de traverse (2), dans lequel une première section du prolongateur de bride (21) recouvre la partie de bride (4) et une seconde section (22) du prolongateur de bride (21) s'étend au-delà du talon (5) et à l'écart de la partie de bande (3) de l'élément de bande (2) ;
lier le prolongateur de bride (21) de la traverse structurelle (20) à la surface intérieure d'une paroi de pale d'éolienne au vent ou sous le vent (3, 31) en utilisant un adhésif (9) pour former une liaison adhésive ; et
utiliser un équipement d'essai ultrasonique non destructif pour évaluer l'intégrité de la liaison adhésive selon le procédé de la revendication 1.

4. Procédé de production d'une pale d'éolienne selon la revendication 3, dans lequel le prolongateur de bride (21) présente une épaisseur comprise entre 0,5 mm et 1 mm, de préférence d'environ 0,8 mm.

5. Procédé de production d'une pale d'éolienne selon la revendication 3 ou la revendication 4, dans lequel la partie de bride (4) de la traverse présente une épaisseur comprise entre 1 mm et 5 mm, de préférence entre 2 mm et 3 mm.

6. Procédé de production d'une pale d'éolienne selon l'une quelconque des revendications 3 à 5, dans lequel la partie de bride (4) de la traverse est au moins deux fois plus épaisse que le prolongateur de bride (21).

7. Procédé de production d'une pale d'éolienne selon l'une quelconque des revendications 3 à 6, dans lequel l'élément de traverse (2) comprend deux parties de bride (4).

8. Procédé de production d'une pale d'éolienne selon la revendication 7, dans lequel l'élément de traverse (2) présente une section transversale sensiblement en forme de C.

9. Procédé de production d'une pale d'éolienne selon la revendication 7 ou 8, dans lequel un prolongateur de bride (21) est intégré à chaque partie de bride (4).
